# FASCICULE DE BREVET EUROPEEN

(11) **EP 2 149 758 B1**
(45) Date de publication et mention de la délivrance du brevet: **07.09.2011**
(21) Numéro de dépôt: 09166236.1
(22) Date de dépôt: 23.07.2009
(51) Int. Cl.: F24D 19/00, F24D 19/10, F24J 2/46, F25B 47/00

(54) **Procédé de mise hors gel d'un système de production de chaleur et installation de production de chaleur associée**
Verfahren zum Frostschutz einer Heizanlage und zugehörige Heizanlage
Method for avoiding freezing in a heating system and associated heating installation

(30) Priorité: 30.07.2008 FR 0804346
(43) Date de publication de la demande: 03.02.2010
(73) Titulaire: Novotherm, 69630 Chaponost (FR)
(72) Inventeur: Cochet, Daniel, 69630 Chaponost (FR)
(74) Mandataire: Chevalier, Renaud Philippe

(56) Documents cités:
- EP-A- 0 047 144
- EP-A- 1 798 497
- DE-A1- 4 318 480
- DE-A1- 19 515 580
- FR-A- 2 441 689

## Description

La présente invention se rapporte à un procédé de mise hors gel d'un système de production de chaleur et à une installation de production de chaleur comportant des moyens adaptés pour la mise en oeuvre du procédé conforme à l'invention.

Elle se rapporte plus particulièrement à un procédé de mise hors gel d'un système de production de chaleur raccordé à un réseau d'échangeur thermique par l'intermédiaire d'un circuit hydraulique dans lequel circule un liquide caloporteur, ledit circuit hydraulique comportant une partie externe sensible au gel et une partie interne isolée, ainsi qu'à une installation de production de chaleur comprenant un système de production de chaleur raccordé à un réseau d'échangeur thermique par l'intermédiaire d'un circuit hydraulique du même type.

Le système de production de chaleur est du type à circulation de liquide (notamment d'eau) tel que par exemple une chaudière, à bois ou à autre combustible, une pompe à chaleur, un poêle hydraulique, un assemblage de capteurs solaires (du type panneau solaire), et le système de production de chaleur est situé dans une zone sensible au gel comme par exemple l'extérieur d'un bâtiment ou toute autre zone non chauffée ou exposée aux basses températures.

Le réseau d'échangeur de chaleur, disposé quant à lui à l'intérieur d'un bâtiment, est par exemple du type échangeur hydraulique, dispositif de stockage hydraulique, radiateur, ballon hydro-accumulateur, plancher chauffant etc.

Dans certaines conditions de température, et plus particulièrement en cas de chute de la température sous zéro degré Celsius pour un liquide caloporteur composé principalement voire essentiellement d'eau, le liquide contenu dans la partie externe du circuit hydraulique risque de geler et d'entraîner la détérioration du circuit hydraulique et également du système de production de chaleur.

Pour protéger du gel de tels installations de production de chaleur, et plus particulièrement la partie externe du circuit hydraulique, il est connu d'introduire dans le circuit d'eau de chauffage une quantité appropriée d'un produit antigel classique, tel que du glycol. Or, ce genre de produit antigel est relativement coûteux, nocifs en cas d'ingurgitation, polluant, nuisible aux performances et au rendement du système de production de chaleur, et très contraignant pour l'entretien de l'installation.

Dans le domaine plus spécifique des panneaux solaires, il est connu, notamment des documents FR 2 437 579 A1 et FR 2 441 689 A1, de recourir à une vidange de la partie haute de l'installation en cas de risque de gel, et ce grâce à une électrovanne ou un distributeur électromécanique sous la commande d'une sonde thermostatique. L'emploi d'une électrovanne ou d'un distributeur électromécanique présente l'inconvénient majeur de rendre la mise hors gel de l'installation inopérante en cas de coupure prolongée de l'alimentation électrique ; une telle situation pouvant en outre être fréquente pendant les périodes de gel justement propices à la mise hors gel en question.

Dans le domaine des panneaux solaires, il est également connu, notamment du document EP 0 047 144 A1, d'isoler le panneau solaire exposé au gel si la température de l'eau de chauffage tombe en-deçà d'une première température, et d'effectuer une vidange automatique du panneau solaire si la température de l'eau tombe en-dessous d'une seconde température inférieure à la première température. Le procédé de mise hors gel décrit dans ce document assure une isolation de la partie externe de la partie interne qu'en cas de chute des températures, soit directement par la fermeture de valves sensibles à la température, soit indirectement avec la fermeture d'une valve sensible à la température suivie de la fermeture d'un clapet passif sensible à la pression.

L'inconvénient de ces installations avec panneau solaire est que seule la température est prise en compte pour déclencher une vidange du panneau solaire, indépendamment d'autres facteurs comme un dysfonctionnement dans l'installation conduisant à une interruption de la production de chaleur. Par exemple, dans le domaine des pompes à chaleur, une coupure dans l'alimentation électrique de ladite pompe à chaleur, et en particulier du moteur électrique alimentant le compresseur de la pompe, conduit à une interruption de la production de chaleur et ainsi au risque de gel dans les canalisations externes.

Dans le domaine des panneaux solaires, il est également connu du document DE 195 15 580 A1 de prévoir une vidange des panneaux solaires dans un réservoir de rétention en cas de risque de gel et/ou en cas d'une panne électrique dans l'installation.

Dans le domaine des pompes à chaleur, il est connu, notamment du document WO 2005/057094 A2, de recourir à une inversion du sens de circulation du liquide entre la pompe à chaleur et le réservoir de stockage afin pompe à liquide alimentée électriquement et capable de fonctionner dans les deux sens sous la commande d'une sonde de température. L'emploi d'une telle pompe à liquide présente l'inconvénient que, en cas de coupure de l'alimentation électrique, la protection contre les risques de gel est totalement inopérante.

L'état de la technique peut également être illustré par l'enseignement du document EP 1 798 497 A2. Ce document divulgue une installation de production de chaleur comprenant un panneau solaire raccordé à des réservoirs d'eau par l'intermédiaire d'un circuit hydraulique, et une pompe de mise en circulation de l'eau qui démarre quand le rayonnement solaire est suffisant et qui s'arrête quand il n'y a pas assez de rayonnement solaire.

La présente invention a notamment pour but de proposer un système, c'est-à-dire un procédé et une installation de production de chaleur comprenant des moyens de mise en oeuvre de ce procédé assurant à faible coût et de façon fiable la mise hors gel des systèmes de production de chaleur.

A cet effet, elle propose un procédé de mise hors gel d'un système de production de chaleur, notamment du type pompe à chaleur, raccordé à un réseau d'échangeur thermique par l'intermédiaire d'un circuit hydraulique dans lequel circule un liquide caloporteur, ledit circuit hydraulique comportant une partie externe sensible au gel et une partie interne, selon la revendication 1.

Ainsi, dès l'apparition du dysfonctionnement, la partie externe susceptible d'être exposée au gel est isolée de la partie interne du circuit hydraulique et ensuite, lorsque le risque de gel est imminent, cette partie externe est vidangée pour éviter toute détérioration du circuit hydraulique et du système de production de chaleur.

La notion de dysfonctionnement est entendue, au sens de la présente demande, comme un événement distinct de tout événement naturel, comme par exemple la baisse des températures et le risque de gel associé ou la diminution de l'ensoleillement ou la tombée de la nuit, mais plutôt comme une anomalie de fonctionnement de l'installation de production de chaleur, comme par exemple une anomalie interne au système de production de chaleur (par exemple une défaillance mécanique ou électronique ou électrique du système de production de chaleur) ou une anomalie externe au système de production de chaleur (par exemple un défaut d'alimentation en énergie tel qu'une coupure d'électricité dans le cas des pompes à chaleur ou un non renouvellement en matière combustible type bois pour une chaudière, ou un défaut du circuit hydraulique tel qu'une fuite ou une rupture de canalisation).

Ainsi, l'étape de détection d'un dysfonctionnement est distincte de l'étape de détection d'un risque de gel, chaque étape nécessitant des moyens spécifiques distincts.

Le procédé conforme à l'invention évite ainsi de façon avantageuse de dissiper de la chaleur à l'extérieur du bâtiment (dans la zone exposée au risque de gel) en cas de dysfonctionnement prolongé dans le temps, car les parties interne et externe sont séparées l'une de l'autre.

Ce procédé permet également de rétablir le fonctionnement de l'installation, malgré le risque de gel, dans la mesure où le système de production de chaleur permet de maintenir une température suffisante du liquide en circulation.

Le procédé comprend en outre une étape de mise en circulation du liquide dans une boucle de dérivation du circuit hydraulique, isolée de la partie externe du circuit hydraulique, jusqu'à atteindre à un débit seuil suffisant pour rétablir la liaison entre la partie externe et la partie interne du circuit hydraulique, avec notamment l'avantage de maintenir un débit dans cette boucle de réaction (où se trouve forcément les moyens de mise en circulation du liquide) et de protéger ces moyens de mise en circulation.

De façon avantageuse, le procédé comprend une étape supplémentaire consistant à rajouter du liquide dans le circuit hydraulique afin de compenser au moins en partie le liquide vidangé si la vidange de la partie externe a été effectuée.

Si, suite à un isolement de la partie externe dû à un dysfonctionnement, aucun risque de gel ne s'est présenté jusqu'à l'arrêt du dysfonctionnement (comme par exemple la réparation de l'anomalie ou le retour de l'électricité) alors la liaison entre les parties externe et interne du circuit hydraulique est rétablie sans nécessité de remplissage, car aucune vidange n'a été effectuée.

Concernant la détection du dysfonctionnement, deux approches sont possibles, soit détecter les causes du dysfonctionnement (comme par exemple une coupure d'électricité) soit détecter les conséquences du dysfonctionnement (comme par exemple la chute du débit de liquide dans le circuit hydraulique suite à une coupure d'électricité entraînant l'arrêt du compresseur d'une pompe à chaleur).

De manière générale, l'étape de détection d'un dysfonctionnement vise à détecter au moins l'une des situations suivantes :
- défaut d'alimentation en énergie du système de production de chaleur, notamment en énergie électrique;
- défaut dans le circuit hydraulique, notamment dans la partie externe du circuit hydraulique ;
- défaillance interne du système de production de chaleur ;
- diminution du débit de liquide en sortie du système de production de chaleur et/ou en entrée du réseau d'échangeur thermique en-deçà d'un seuil de débit prédéterminé ;
- diminution de la température de liquide en entrée et/ou en sortie du système de production de chaleur et/ou du réseau d'échangeur thermique en-deçà d'un seuil de température prédéterminé ;
- diminution de la pression de liquide en sortie du système de production de chaleur et/ou en entrée du réseau d'échangeur thermique en-deçà d'un seuil de pression prédéterminé.

L'invention concerne également une installation de production de chaleur comprenant un système de production de chaleur raccordé à un réseau d'échangeur thermique par l'intermédiaire d'un circuit hydraulique dans lequel circule un liquide caloporteur, ledit circuit hydraulique comportant une partie externe sensible au gel et une partie interne isolée, selon la revendication 4.

Les moyens de détection d'un dysfonctionnement peuvent être du type à détecter au moins l'une des situations décrites ci-dessus en référence au procédé selon l'invention. Comme mentionné ci-dessus, les moyens de détection d'un dysfonctionnement sont distincts des moyens de détection d'un risque de gel.

Cette installation permet d'autoriser la réouverture du circuit après l'isolation de la partie externe quand le dysfonctionnement disparaît, mêm si le risque de gel est encore détecté. Cette installation permet également d'interdire la réouverture du circuit quelque soient les conditions de température extérieure. Cette installation permet de protéger l'installation dès l'apparition du dysfonctionnement, indépendamment de la température extérieure ou du risque de gel.

Dans une réalisation particulière, le circuit hydraulique comprend :
- une canalisation d'entrée reliant la sortie du système de production de chaleur à l'entrée du réseau d'échangeur thermique,
- une canalisation de sortie reliant la sortie du réseau d'échangeur thermique à l'entrée du système de production de chaleur,
- une canalisation de liaison reliant entre elles lesdites canalisations d'entrée et de sortie pour définir ensemble une boucle de dérivation reliant l'entrée du réseau d'échangeur thermique et la sortie du réseau d'échangeur thermique et court-circuitant le système de production de chaleur ; et
- une conduite de vidange de la partie externe du circuit hydraulique.

En outre, les moyens de dérivation comprennent une vanne hydraulique disposée sur la canalisation d'entrée ou de sortie, ladite vanne étant du type vanne déviatrice à trois voies et étant commandée par les moyens de détection d'un dysfonctionnement pour occuper deux positions :
- une position ouverte, si aucun dysfonctionnement n'est détecté par les moyens de détection d'un dysfonctionnement, dans laquelle le liquide circule entre le réseau d'échangeur thermique et le système de production de chaleur via les canalisations d'entrée et de sortie, et
- une position fermée, si un dysfonctionnement est détecté par les moyens de détection d'un dysfonctionnement, dans laquelle le liquide circule dans la boucle de dérivation.

De plus, les moyens de mise en circulation du liquide sont disposés dans la boucle de court-circuit.

Ainsi, cette installation permet de maintenir un débit suffisant dans la boucle de dérivation où se trouvent les moyens de mise en circulation, protégeant ainsi ces moyens de mise en circulation, avant le retour de l'installation dans un mode de fonctionnement normal par réouverture de la vanne déviatrice.

Selon une possibilité de l'invention, les moyens de détection d'un dysfonctionnement comprennent un détecteur de débit disposé dans la boucle de dérivation du circuit hydraulique, ledit détecteur de débit commandant la vanne déviatrice de sorte que :
- au-dessus d'un débit seuil prédéterminé, la vanne déviatrice est en position ouverte ;
- en-dessous du débit seuil prédéterminé, la vanne déviatrice est en position fermée.

Dans un mode de réalisation de l'invention, les moyens de détection d'un dysfonctionnement comprennent un détecteur de température, distinct des moyens de détection d'un risque de gel, conçu pour détecter la température dans la canalisation d'entrée ou de sortie, ledit détecteur de température commandant les moyens de mise en circulation du liquide de sorte que:
- au-dessus d'une température seuil prédéterminée, les moyens de mise en circulation sont en fonctionnement afin de maintenir la circulation de liquide ;
- en-dessous de la température seuil prédéterminée, les moyens de mise en circulation sont en arrêt de sorte que la circulation de liquide est interrompue.

Dans une réalisation de l'invention, le détecteur de débit commande directement la vanne déviatrice automatique. Dans une autre réalisation de l'invention, le détecteur de débit commande la vanne déviatrice en série ou via le détecteur de pression.

Dans une variante, les moyens de détection d'un dysfonctionnement comprennent un détecteur de température, distinct des moyens de détection d'un risque de gel, conçu pour détecter la température dans la canalisation d'entrée ou de sortie, ledit détecteur de température commandant la vanne déviatrice de sorte que :
- au-dessus d'une température seuil prédéterminée, la vanne déviatrice est en position ouverte ;
- en-dessous de la température seuil prédéterminée, la vanne déviatrice est en position fermée.

Dans un mode de réalisation de l'invention, la vanne déviatrice comprend une entrée sur la partie externe du circuit hydraulique, une première sortie sur la partie interne du circuit hydraulique et une deuxième sortie sur la conduite de vidange, et peut occuper les deux positions suivantes :
- la position ouverte dans laquelle l'entrée et la première sortie sont en communication ; et
- la position fermée dans laquelle l'entrée et la deuxième sortie sont en communication.

Cette vanne hydraulique, ou vanne déviatrice, permet ainsi de mettre en liaison la partie externe du circuit hydraulique (entrée de la vanne) soit avec la partie interne du circuit hydraulique (première sortie de la vanne) en fonctionnement normal de l'installation, soit avec la conduite de vidange (deuxième sortie de la vanne) en cas de dysfonctionnement déclencheur d'un isolement des parties interne et externe du circuit hydraulique.

Selon une caractéristique, les moyens pour vidanger la partie externe du circuit hydraulique comprennent une vanne de vidange à deux voies, notamment du type vanne thermostatique, disposée sur la conduite de vidange et commandée par les moyens de détection d'un risque de gel.

Ainsi, en cas de dysfonctionnement et notamment en cas d'absence d'alimentation électrique, la vanne déviatrice met en communication la partie externe du circuit hydraulique avec la conduite de vidange qui est fermée par la vanne deux voies (par exemple du type vanne thermostatique). En cas de risque de gel, la vanne deux voies est ouverte, permettant ainsi la vidange de la partie externe du circuit hydraulique via la conduite de vidange ouverte.

Selon une autre caractéristique, les moyens de dérivation comprennent une soupape différentielle disposée sur la canalisation de liaison, en parallèle du réseau d'échangeur thermique entre les canalisations respectivement d'entrée et de sortie du circuit hydraulique.

Dans un autre mode de réalisation de l'invention, la vanne déviatrice comprend une entrée sur la partie interne du circuit hydraulique, une première sortie sur la partie externe du circuit hydraulique, et une deuxième sortie sur la canalisation de liaison, et peut occuper les deux positions suivantes :
- la position ouverte dans laquelle l'entrée et la première sortie sont en communication ; et
- la position fermée dans laquelle l'entrée et la deuxième sortie sont en communication.

Cette vanne hydraulique, ou vanne déviatrice, permet ainsi de mettre en liaison la partie interne du circuit hydraulique (entrée de la vanne) soit avec la partie externe du circuit hydraulique (première sortie de la vanne) en fonctionnement normal de l'installation, soit avec la canalisation de liaison (deuxième sortie de la vanne) pour une circulation dans la boucle de dérivation en cas de dysfonctionnement déclencheur d'un isolement des parties interne et externe du circuit hydraulique.

Selon une caractéristique, les moyens pour vidanger la partie externe du circuit hydraulique comprennent :
- une première vanne de vidange à deux voies disposée sur la conduite de vidange et commandée par les moyens de détection d'un dysfonctionnement ; et
- une deuxième vanne de vidange à deux voies, notamment du type vanne thermostatique, disposée sur la conduite de vidange et commandée par les moyens de détection d'un risque de gel.

Selon une possibilité de l'invention, l'installation comprend un détecteur de pression conçu pour détecter une chute de la pression de liquide dans la partie externe du circuit hydraulique en-deçà d'une pression seuil prédéterminée en cas de vidange de ladite partie externe via la conduite de vidange, et le détecteur de pression commande la vanne déviatrice afin de maintenir celle-ci en position fermée tant que la pression de liquide dans la partie externe du circuit hydraulique est inférieure à la pression seuil.

Dans cette possibilité, l'alimentation de la partie externe purgée se fait, notamment manuellement, jusqu'à ce que la pression soit suffisante dans la partie externe pour un retour à la normale. Bine entendu, le détecteur de pression n'est pas nécessairement disposé à l'extérieur du bâtiment.

De façon avantageuse, l'installation comprend en outre des moyens pour des moyens pour remplir la partie externe du circuit hydraulique après vidange, notamment du type alimentateur automatique en liquide. Ces moyens pour remplir la partie externe du circuit hydraulique constituent ainsi des moyens pour rajouter du liquide dans le circuit hydraulique afin de compenser au moins en partie le liquide vidangé si la vidange de la partie externe a été effectuée.

Les moyens de dérivation peuvent également comprendre un clapet anti-retour disposé sur la canalisation de sortie, si la vanne déviatrice est disposée sur la canalisation d'entrée, ou sur la canalisation d'entrée, si la vanne déviatrice est disposée sur la canalisation de sortie ; ledit clapet anti-retour étant en outre disposé entre le système de production de chaleur et la jonction de la canalisation de liaison avec la canalisation d'entrée ou de sortie.

D'autres caractéristiques et avantages de la présente invention apparaîtront à la lecture de la description détaillée ci-après, de cinq exemples de mise en oeuvre non limitative, faite en référence aux figures annexées dans lesquelles :
- la figure 1 est une représentation schématique d'un premier mode de réalisation d'une installation de production conforme à l'invention ;
- la figure 2 est une représentation schématique d'un deuxième mode de réalisation d'une installation de production conforme à l'invention;
- la figure 3 est une représentation schématique d'un troisième mode de réalisation d'une installation de production conforme à l'invention ;
- la figure 4 est une représentation schématique d'un quatrième mode de réalisation d'une installation de production conforme à l'invention ; et
- la figure 5 est une représentation schématique d'un cinquième mode de réalisation d'une installation de production conforme à l'invention.

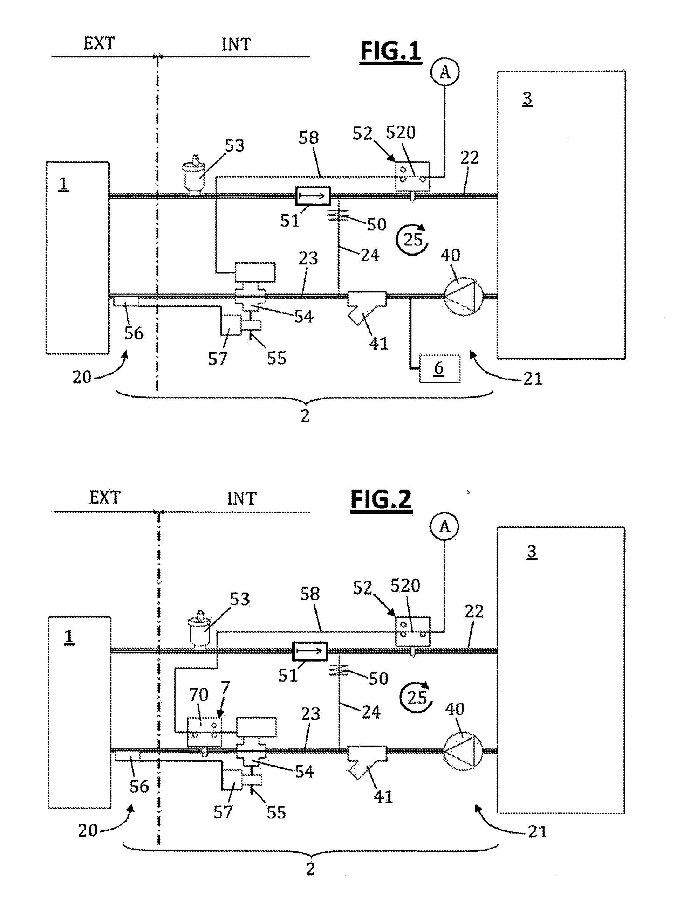

Un premier mode de réalisation d'une installation de production de chaleur est illustré en figure 1, où ladite installation comprend un système de production de chaleur 1, en particulier du type pompe à chaleur alimentée électriquement pour le fonctionnement du moteur électrique actionnant le compresseur. Le système de production de chaleur 1 est du type à circulation de liquide caloporteur, ou liquide de travail, comme par exemple de l'eau ; ledit système de production de chaleur 1 étant bien entendu conçu pour chauffer le liquide

L'installation comprend en outre un circuit hydraulique 2 pour acheminer le liquide chauffé du système de production de chaleur 1 vers son lieu d'utilisation, à savoir un réseau d'échangeur thermique 3, et ensuite ramené le liquide refroidi après utilisation du réseau d'échangeur thermique 3 vers le système de production de chaleur 1.

Le réseau d'échangeur thermique 3 est situé à l'intérieur d'un bâtiment tandis que le système de production de chaleur 1 est situé à l'extérieur de ce même bâtiment, soit dehors soit à l'intérieur d'un autre bâtiment non chauffé, de sorte que le système de production de chaleur 1 est situé dans une zone sensible au gel car exposée aux basses températures. Ainsi, le circuit hydraulique 2 comprend d'une part une partie externe 20 sensible au gel, disposée principalement hors du bâtiment correspondant à la zone EXT dite zone extérieure exposée aux basses températures, et d'autre part une partie interne 21 non exposée au gel, disposée dans le bâtiment correspondant à la zone INT dite zone intérieure non exposée aux basses températures.

En outre, le circuit hydraulique 2 comprend une canalisation d'entrée 22 reliant la sortie du système de production de chaleur 1 à l'entrée du réseau d'échangeur thermique 3 et une canalisation de sortie 23 reliant la sortie du réseau d'échangeur thermique 3 à l'entrée du système de production de chaleur 1 ; le liquide chaud circulant dans la canalisation d'entrée 22 vers le réseau d'échangeur thermique 3 et le liquide refroidi circulant dans la canalisation de sortie 23 vers le système de production de chaleur 1. Une pompe hydraulique 40 est incorporée sur l'une des canalisations 22, 23, et plus particulièrement sur la canalisation de sortie 23, pour assurer la circulation du liquide dans l'installation. La canalisation d'entrée 22 est située en hauteur relativement à la canalisation de sortie 23 pour permettre notamment une descente par gravité du liquide entre l'entrée et la sortie du réseau d'échangeur thermique 3. L'installation peut également comprendre un filtre 41 disposé sur la canalisation de sortie 23, en aval de la pompe hydraulique 40.

Pour mettre en oeuvre le procédé conforme à l'invention, l'installation comprend plusieurs moyens adéquats disposés sur le circuit hydraulique 2, à savoir :
- une soupape différentielle 50 disposée en parallèle entre les canalisations respectivement d'entrée 22 et de sortie 23 du circuit hydraulique 2, ladite soupape différentielle 50 étant disposée sur une canalisation de liaison 24 reliant entre elles les canalisations d'entrée 22 et de sortie 23 ;
- un clapet anti-retour 51 disposée sur la canalisation d'entrée 22 entre la sortie du système de production de chaleur 1 et la liaison avec la soupape différentielle 50 (autrement dit la jonction entre la canalisation de liaison 24 et la canalisation d'entrée 22), où le clapet anti-retour 51 est située dans la zone intérieure INT, autrement dit au niveau de la partie interne 21 du circuit hydraulique 2 ;
- un détecteur de débit 52 disposé sur la canalisation d'entrée 22 entre la liaison avec la soupape différentielle 50 et l'entrée du réseau d'échangeur thermique 3, en aval du clapet anti-retour 51 ;
- un purgeur 53 disposé sur la canalisation d'entrée 22 entre la sortie du système de production de chaleur 1 et le clapet anti-retour 51, ledit purgeur 53 étant situé en hauteur sur le circuit hydraulique 2 afin de constituer une prise d'air ou évent nécessaire d'une part à une entrée de l'air dans le circuit hydraulique 2 lors d'une vidange dudit circuit et d'autre part à une purge de l'air contenu dans le circuit hydraulique 2 lors d'un remplissage dudit circuit consécutif à une vidange ;
- une vanne déviatrice 54 à trois voies disposée sur la canalisation de sortie 23 entre la liaison avec la soupape différentielle 50 (autrement dit la jonction entre la canalisation de liaison 24 et la canalisation de sortie 23) et l'entrée du système de production de chaleur 1, où ladite vanne déviatrice 54 présente une entrée sur la partie externe 20 du circuit hydraulique 2, une première sortie sur la partie interne 21 du circuit hydraulique 2 et une deuxième sortie sur une conduite de vidange 55, et où ladite vanne déviatrice 54 est commandée par le détecteur de débit 52 ;
- un détecteur de température 56 disposé sur la partie externe 21 du circuit hydraulique 2, par exemple sur la canalisation de sortie 23 où circule le liquide refroidi, afin de détecter un risque de gel du liquide présent dans la partie externe 21 du circuit hydraulique 2 ;
- une vanne de vidange 57 à deux voies disposée sur la conduite de vidange 55 et commandée par le détecteur de température 56 ;
- un alimentateur automatique 6 en liquide connecté à la canalisation de sortie 23 entre la sortie du réseau d'échangeur thermique 3 et la liaison avec la soupape différentielle 50 (autrement dit la jonction entre la canalisation de liaison 24 et la canalisation de sortie 23), par exemple entre le filtre 41 et la pompe hydraulique 40.

La soupape différentielle 50, ou vanne différentielle, a pour rôle de limiter une pression différentielle trop importante entre les canalisations d'entrée 22 et de sortie 23 et ainsi de s'ouvrir dès que la pression différentielle est supérieure à une pression seuil prédéterminée. La soupape différentielle 50 est donc utile pour maintenir un débit dans la partie interne 21 du circuit 2 lorsque la vanne déviatrice 54 est fermée.

Le clapet anti-retour 51 permet, avec la vanne déviatrice 54, d'isoler la partie externe 20 de la partie interne 21 du circuit hydraulique 2 ; le clapet anti-retour 51 assurant la séparation au niveau de la canalisation d'entrée 22 tandis que la vanne déviatrice 54 assure la séparation au niveau de la canalisation de sortie 23.

La vanne déviatrice 54 peut occuper deux positions distinctes, à savoir :
- une position ouverte (ou de fonctionnement normale) dans laquelle l'entrée et la première sortie de la vanne déviatrice 54 sont en communication, correspondant à un écoulement continue dans la canalisation de sortie 23 entre la partie externe 20 et la partie interne 21 du circuit hydraulique 2 ; et
- une position fermée (ou de dérivation) dans laquelle l'entrée et la deuxième sortie de la vanne déviatrice 54 sont en communication, correspondant à une dérivation mettant en communication la partie externe 20 du circuit hydraulique 2, dans la canalisation de sortie 23, avec la conduite de vidange 55, et correspondant également à une fermeture de la circulation dans la canalisation de sortie 23.

Dans la position fermée de la vanne déviatrice 54, le liquide circule dans une boucle de dérivation 25 comprenant :
- le réseau d'échangeur thermique 3 ;
- la portion de canalisation de sortie 23 entre la sortie du réseau d'échangeur thermique 3 et la canalisation de liaison 25 ou la vanne déviatrice 54 ;
- la canalisation de liaison 25 qui court-circuite la pompe à chaleur 1 ; et
- la portion de canalisation d'entrée 22 entre la canalisation de liaison 25 et l'entrée du réseau d'échangeur thermique 3.

Le détecteur de débit 52, ou débitmètre ou contrôleur de débit ou débistat, commande la vanne déviatrice 54, de sorte que :
- au-dessus d'un débit seuil prédéterminée, la vanne déviatrice 54 est en position ouverte;
- en-dessous du débit seuil prédéterminée, la vanne déviatrice 54 est en position fermée.

Le détecteur de débit 52 commande électriquement la vanne déviatrice 54 via un circuit de commande 58 relié à une alimentation électrique A et sur lequel il comprend un interrupteur ou contacteur électrique 520 pouvant occuper deux positions :
- au-dessus d'un débit seuil prédéterminée, l'interrupteur électrique 520 du détecteur de débit 52 est fermé (ainsi qu'illustré en figure 1) et le circuit de commande 58 alimente électriquement un moteur de la vanne déviatrice 54 afin de maintenir cette dernière, la vanne déviatrice 54, en position ouverte ;
- en-dessous du débit seuil prédéterminée, l'interrupteur électrique 520 du détecteur de débit 52 est ouvert et interrompt l'alimentation électrique du moteur de la vanne déviatrice 54 en coupant le circuit de commande 58, de sorte que la vanne déviatrice 54 n'est plus alimenté électriquement et revient en position fermée sous l'influence d'un ressort de rappel.

La vanne de vidange 57, avantageusement du type vanne thermostatique, peut occuper deux positions distinctes, à savoir :
- une position ouverte (ou de vidange) dans laquelle l'écoulement est libre, par gravité, dans la conduite de vidange 55 ;
- une position fermée dans laquelle l'écoulement est fermé dans la conduite de vidange 55.

Le détecteur de température 56, par exemple du type aquastat équipé d'un bulbe thermostatique dans la partie externe 20 de la canalisation de sortie 23, commande mécaniquement la vanne de vidange 57, de sorte que :
- au-dessus d'une température seuil prédéterminée et caractéristique d'un risque de gel dans la partie externe 20 du circuit hydraulique 2, comme par exemple une température de l'ordre de zéro degré Celsius, la vanne de vidange 57 est en position fermée ;
- en-dessous de la température seuil prédéterminée, la vanne de vidange 57 est en position ouverte.

Le fonctionnement de l'installation est décrit ci-après, où le système de production de chaleur 1 est une pompe à chaleur alimentée électriquement.

Si une coupure d'électricité a lieu, correspondant à une situation de dysfonctionnement dans l'installation, la production de chaleur est arrêtée et la pompe hydraulique 40, alimentée en électricité, s'arrête également de fonctionner, de sorte que le débit de liquide sortant de la pompe à chaleur 1 et circulant dans la canalisation d'entrée 22 diminue jusqu'à atteindre le débit seuil prédéterminé détecté par le détecteur de débit 52 qui commande alors la fermeture de la vanne déviatrice 54, isolant de ce fait en combinaison avec le clapet anti-retour 51 la partie externe 20 de la partie interne 21 du circuit hydraulique 2.

Si ensuite la température dans la zone extérieure EXT diminue de sorte que la température détectée par le détecteur de température 56 atteigne la température seuil prédéterminée, alors la vanne de vidange 57 est ouverte et la partie externe 20 du circuit hydraulique 2 est vidangée par gravité, entre le clapet 51 et la vanne déviatrice 54 ; l'entrée d'air nécessaire à cette vidange s'effectuant à travers le purgeur 53. Il est bien entendu que le liquide présent dans la pompe à chaleur 1 est également vidangé lors de cette étape.

Si enfin l'alimentation électrique est rétablie, et donc que la pompe à chaleur 1 et la pompe hydraulique 40 fonctionnent à nouveau, la pompe hydraulique 40 remet en circulation le liquide qui circule dans un premier temps à travers la soupape différentielle 50 qui est ouverte, de sorte que le débit augmente dans le détecteur de débit 52 jusqu'à atteindre le débit seuil conduisant à une commande d'ouverture de la vanne déviatrice 54. L'ouverture de la vanne déviatrice 54 créée une chute de pression dans la canalisation de sortie 23 de sorte que, par un phénomène d'aspiration, l'alimentateur automatique 6 rajoute du liquide dans le circuit hydraulique 2 afin de compenser le liquide vidangé. La soupape différentielle 50 se ferme et l'installation retrouve son fonctionnement normal.

Si aucune vidange n'avait été effectuée après la fermeture de la vanne déviatrice 54 pour cause de coupure d'électricité, et que l'alimentation électrique est rétablie, alors la pompe à chaleur 1 remet le liquide en circulation dans la conduite d'entrée 22 de sorte que le débit augmente et que le détecteur de débit 52 commande l'ouverture de la vanne déviatrice 54 pour que l'installation retrouve son fonctionnement normal.

Un second mode de réalisation d'une installation de production de chaleur est illustré en figure 2, où, à la différence du premier mode de réalisation, l'installation ne comprend pas d'alimentateur automatique 6, mais le détecteur de débit 52 commande la vanne déviatrice 54 via un détecteur de pression 7 conçu pour détecter la chute de la pression de liquide dans la partie externe 20 du circuit hydraulique 2 en deçà d'une pression seuil prédéterminée.

Ce détecteur de pression 7, ou pressostat ou manostat ou manocontact, détecte la pression dans la canalisation de sortie 23 entre l'entrée du système de production de chaleur 1 et la vanne déviatrice 54, et comprend un interrupteur ou contacteur électrique 70 disposé sur le circuit de commande 58 entre le détecteur de débit 52 et la vanne déviatrice 54, et qui peut occuper deux positions :
- si la pression détectée par le détecteur de pression 7 est supérieure à une pression seuil prédéterminée, alors l'interrupteur électrique 70 du détecteur de pression 7 est fermé (ainsi qu'illustré en figure 2), et le circuit de commande 58 alimente électriquement le moteur de la vanne déviatrice 54 afin de maintenir cette dernière en position ouverte (à condition bien entendu que l'interrupteur électrique du détecteur de débit 52 soit également fermé) ;
- si la pression détectée par le détecteur de pression 7 est inférieure à la pression seuil, alors l'interrupteur électrique 70 du détecteur de pression 7 est ouvert et interrompt l'alimentation électrique du moteur de la vanne déviatrice 54 de sorte que cette dernière est en position fermée (indépendamment du fait que l'interrupteur électrique du détecteur de débit 52 soit ouvert ou fermé).

Le fonctionnement de l'installation est décrit ci-après, où le système de production de chaleur 1 est une pompe à chaleur alimentée électriquement.

Si une coupure d'électricité a lieu, le détecteur de débit 52 commande la fermeture de la vanne déviatrice 54 de la même façon que décrit ci-avant ; l'interrupteur électrique 70 du détecteur de pression 7 étant fermé dans les conditions normales de fonctionnement.

Si aucune vidange n'avait été effectuée après la fermeture de la vanne déviatrice 54 pour cause de coupure d'électricité, et que l'alimentation électrique est rétablie, alors la pression est maintenue dans les canalisations, et en particulier dans la canalisation de sortie 23, de sorte que l'interrupteur 70 du détecteur de pression 7 est resté fermé et que l'installation peut retrouver son fonctionnement normal de la même façon que dans le cas du premier mode de réalisation décrit ci-dessus.

Par contre, si une vidange a été effectuée après la fermeture de la vanne déviatrice 54, et que l'alimentation électrique est rétablie, alors la pression a chutée dans la partie externe 20 du circuit hydraulique 2, et en particulier au point de mesure du détecteur de pression 7, de sorte que l'interrupteur électrique 70 dudit détecteur de pression 7 est ouvert et que la vanne déviatrice 54 reste fermée, afin d'éviter de relancer la pompe à chaleur 1 avec un déficit de liquide dans le circuit hydraulique 2. Il est donc nécessaire d'ouvrir manuellement la vanne déviatrice 54 pour amorcer l'installation et faire remonter la pression dans tout le circuit hydraulique 2, pour finalement retrouver un fonctionnement normal de l'installation.

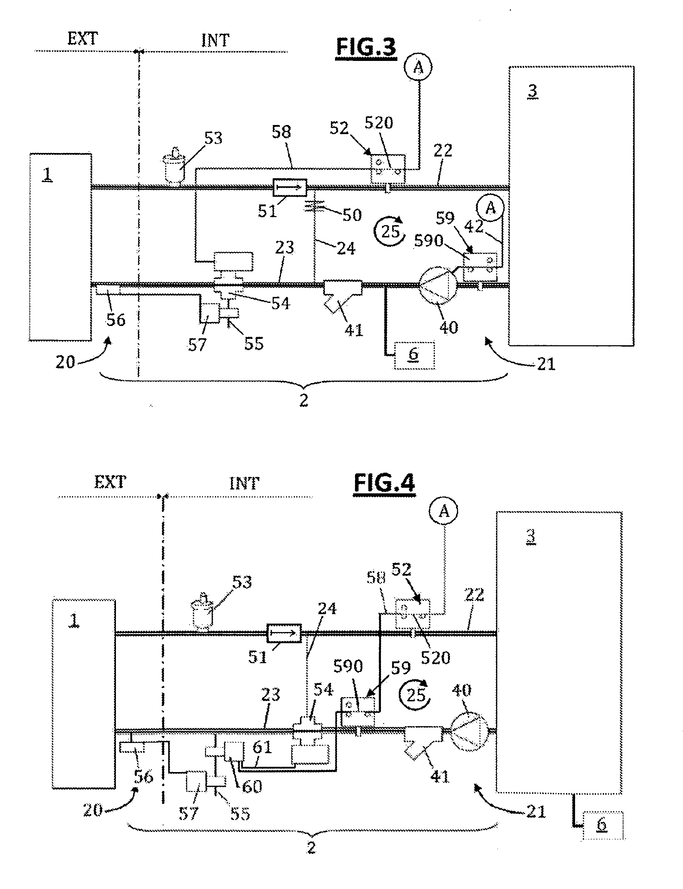

Un troisième mode de réalisation d'une installation de production de chaleur est illustré en figure 3, où l'installation est semblable à celle du premier mode de réalisation à la différence qu'elle comprend en outre un détecteur de température 59 qui commande électriquement la pompe hydraulique 40 en fonction de la température de liquide dans la canalisation de sortie 23.

La pompe hydraulique 40 est assujettie au détecteur de température 59 dans le réseau d'échangeur thermique 3, car ce détecteur de température 59 détecte la température dans la canalisation de sortie 23 directement en sortie du réseau d'échangeur thermique 3, entre la pompe hydraulique 40 et la sortie du réseau d'échangeur thermique 3.

Ce détecteur de température 59 comprend un interrupteur ou contacteur électrique 590 disposé sur un circuit d'alimentation électrique 42 de la pompe hydraulique 40, ledit circuit d'alimentation électrique 42 étant relié à une alimentation électrique A, et peut occuper deux positions :
- si la température détectée par le détecteur de température 59 est supérieure à une température seuil prédéterminée, alors l'interrupteur électrique 590 du détecteur de température 59 est fermé (ainsi qu'illustré en figure 3), et le circuit d'alimentation électrique 42 alimente électriquement la pompe hydraulique 40 afin de maintenir la circulation de liquide dans le circuit hydraulique 2 ;
- si la température détectée par le détecteur de température 59 est inférieure à la température seuil, alors l'interrupteur électrique 590 du détecteur de température 59 est ouvert et interrompt l'alimentation électrique de la pompe hydraulique 40 de sorte que la circulation de liquide est interrompue dans le circuit hydraulique 2.

Lors d'une interruption prolongée de la production de chaleur alors que l'alimentation électrique reste établie, comme par exemple dans le cas d'un dysfonctionnement interne de la pompe à chaleur 1 du type panne du compresseur de la pompe à chaleur 1, la température diminue dans le circuit hydraulique 2. Si la température du liquide dans le réseau d'échangeur thermique 3 chute en deçà de la température seuil prédéterminée, le détecteur de température 59 commande alors électriquement l'arrêt de la pompe hydraulique 40, ce qui aura pour effet de stopper la circulation de liquide dans le circuit hydraulique 2 et donc de faire diminuer le débit de liquide. Ainsi, le détecteur de débit 52 détecte cette chute de débit et commande la fermeture de la vanne déviatrice 54, isolant de ce fait en combinaison avec le clapet anti-retour 51 la partie externe 20 de la partie interne 21 du circuit hydraulique 2, avec les conséquences vues précédemment dans la description du fonctionnement de l'installation conforme au premier mode de réalisation.

Ainsi, dans le troisième mode de réalisation, l'installation permet avec son détecteur de température 59 de détecter un dysfonctionnement supplémentaire, comme une panne interne dans le système de production de chaleur 1, qui peut par exemple ne pas causer directement une réduction du débit mais qui cause une chute de la température dans le circuit hydraulique 2. Un tel détecteur de température 59 peut bien entendu être intégré à l'installation conforme au second mode de réalisation.

Un contacteur électrique peut éventuellement commander un réchauffeur électrique permettant de maintenir hors gel la partie interne 21 du circuit hydraulique 2.

Un quatrième mode de réalisation d'une installation de production de chaleur est illustré en figure 4, et se distingue principalement des trois premiers modes de réalisation décrits ci-dessus en ce que la vanne déviatrice 54 est disposée sur la jonction entre la canalisation de sortie 23 et la canalisation de liaison 24 afin d'orienter la circulation de liquide vers la pompe à chaleur 1 en fonctionnement normal ou vers la canalisation d'entrée 22 lorsqu'un dysfonctionnement est détecté. Dans ce quatrième mode de réalisation, la soupape différentielle 50 décrite ci-dessus est absente de l'installation, et plus particulièrement de la canalisation de liaison 24, car inutile du fait de la disposition de la vanne déviatrice 54.

Cette installation comprend successivement sur la canalisation d'entrée 22, entre la pompe à chaleur 1 et réseau d'échangeur thermique 3, comme dans les trois premiers modes de réalisation décrits ci-dessus:
- le purgeur 5 ;
- le clapet anti-retour 51 ; et
- le détecteur de débit 52 comprenant l'interrupteur 520 disposé sur le circuit de commande 58.

Cette installation comprend successivement sur la canalisation de sortie 23, entre la pompe à chaleur 1 et le réseau d'échangeur thermique 3, comme dans les trois premiers modes de réalisation décrits ci-dessus :
- le détecteur de température 56 commandant la vanne de vidange 57, dite deuxième vanne de vidange, qui est disposée sur la conduite de vidange 55 ;
- le filtre 41 ; et
- la pompe hydraulique 40.

Cette installation comprend en outre:
- un détecteur de température 59 disposé sur la canalisation de sortie 23, en sortie du réseau d'échangeur thermique 3, entre la pompe hydraulique 40 et la vanne déviatrice 54 ; et
- une vanne de vidange 60, dite première vanne de vidange, à deux voies disposée sur la conduite de vidange 55 en série avec la deuxième vanne de vidange 57.

Dans ce quatrième mode de réalisation, le détecteur de débit 52 commande la première vanne de vidange 60 via le détecteur de température 59 et commande également la vanne déviatrice 54 via la première vanne de vidange 60.

Le détecteur de température 59 comprend un interrupteur ou contacteur électrique 590 disposé sur le circuit de commande 58 entre l'interrupteur 520 du détecteur de débit 52 et la première vanne de vidange 60 et peut occuper deux positions :
- une position fermée si la température détectée par le détecteur de température 59 est supérieure à une température seuil prédéterminée, où l'interrupteur électrique du détecteur de température 59 est fermé (ainsi qu'illustré en figure 4) de sorte que le circuit d'alimentation de commande 58 alimente électriquement la première vanne de vidange 60 afin que celle-ci occupe une position fermée et ferme la circulation de liquide dans la conduite de vidange 55 ;
- une position ouverte si la température détectée par le détecteur de température 59 est inférieure à la température seuil, où l'interrupteur électrique du détecteur de température 59 est ouvert et interrompt l'alimentation électrique de la première vanne de vidange 60 de sorte que la première vanne de vidange 60 est en position ouverte et ainsi la circulation de liquide est ouverte dans la conduite de vidange 55.

La vanne déviatrice 54 est du type trois voies / deux positions avec une entrée sur la partie interne 21 du circuit (c'est-à-dire sur la conduite de sortie 23 côté réseau d'échangeur thermique 3), une première sortie sur la partie externe 20 du circuit (c'est-à-dire sur la conduite de sortie 23 côté pompe à chaleur 1) et une deuxième sortie sur la canalisation de liaison 24, et peut occuper les deux positions suivantes :
- une position ouverte (ou de fonctionnement normale) dans laquelle l'entrée et la première sortie de la vanne déviatrice 54 sont en communication, correspondant à un écoulement continue dans la canalisation de sortie 23 entre la partie externe 20 et la partie interne 21 du circuit hydraulique 2 ; et
- une position fermée (ou de dérivation) dans laquelle l'entrée et la deuxième sortie de la vanne déviatrice 54 sont en communication, correspondant à une coupure de la circulation de liquide dans la canalisation 23 dérivant le flux de liquide dans la canalisation de liaison 24, isolant de ce fait en combinaison avec le clapet anti-retour 51 la partie externe 20 de la partie interne 21 du circuit hydraulique 2.

Le détecteur de température 59 commande également la vanne déviatrice 54 via la première vanne de vidange 60, et plus particulièrement via un circuit de commande secondaire 61, de sorte que :
- si le détecteur de température 59 est en position fermée, autrement dit si la première vanne de vidange 60 est fermée, alors le circuit de commande secondaire 61 alimente électriquement la vanne déviatrice 54 afin que celle-ci occupe la position ouverte ou de fonctionnement normale ;
- si le détecteur de température 59 est en position ouverte, autrement dit si la première vanne de vidange 60 est ouverte, alors le circuit de commande secondaire 61 n'alimente plus électriquement la vanne déviatrice 54 de sorte que celle-ci occupe la position fermée ou de dérivation.

La première vanne de vidange 60 peut comporter un contact de fin course en mode normal pour alimenter la vanne déviatrice 54 et autoriser son ouverture vers la pompe à chaleur 1 seulement après fermeture de la première vanne de vidange 60.

L'installation comprend en outre un alimentateur automatique 6 en liquide connecté au réseau d'échangeur thermique 3.

Le fonctionnement de l'installation est décrit ci-après, où le système de production de chaleur 1 est une pompe à chaleur alimentée électriquement.

Si une coupure d'électricité a lieu, correspondant à une situation de dysfonctionnement dans l'installation, la production de chaleur et la pompe hydraulique 40, alimentées en électricité, sont arrêtées et le débit de liquide sortant de la pompe à chaleur 1 et circulant dans la canalisation d'entrée 22 diminue jusqu'à atteindre le débit seuil prédéterminé détecté par le détecteur de débit 52 qui commande alors :
- la fermeture de la vanne déviatrice 54 isolant de ce fait, en combinaison avec le clapet anti-retour 51, la partie externe 20 de la partie interne 21 du circuit hydraulique 2 ; et
- l'ouverture de la première vanne de vidange 60.

Si ensuite la température dans la zone extérieure EXT diminue de sorte que la température détectée par le détecteur de température 56 atteigne la température seuil prédéterminée, alors la deuxième vanne de vidange 57 est ouverte, tout comme la première vanne de vidange 60, et alors la partie externe 20 du circuit hydraulique 2 est vidangée par gravité, entre le clapet 51 et la vanne déviatrice 54 ; l'entrée d'air nécessaire à cette vidange s'effectuant à travers le purgeur 53. Il est bien entendu que le liquide présent dans la pompe à chaleur 1 est également vidangé lors de cette étape.

Si enfin l'alimentation électrique est rétablie, et donc que la pompe à chaleur 1 et la pompe hydraulique 40 fonctionnent à nouveau, la pompe hydraulique 40 remet en circulation le liquide qui circule dans un premier temps à travers la canalisation de liaison 24 via la vanne déviatrice 54 qui est en position fermée, de sorte que le débit augmente dans le détecteur de débit 52 jusqu'à atteindre le débit seuil conduisant à une commande d'ouverture de la vanne déviatrice 54. L'ouverture de la vanne déviatrice 54 créée une chute de pression dans la canalisation de sortie 23 de sorte que, par un phénomène d'aspiration, l'alimentateur automatique 6 rajoute du liquide dans le circuit hydraulique 2 afin de compenser le liquide vidangé. L'installation retrouve alors son fonctionnement normal.

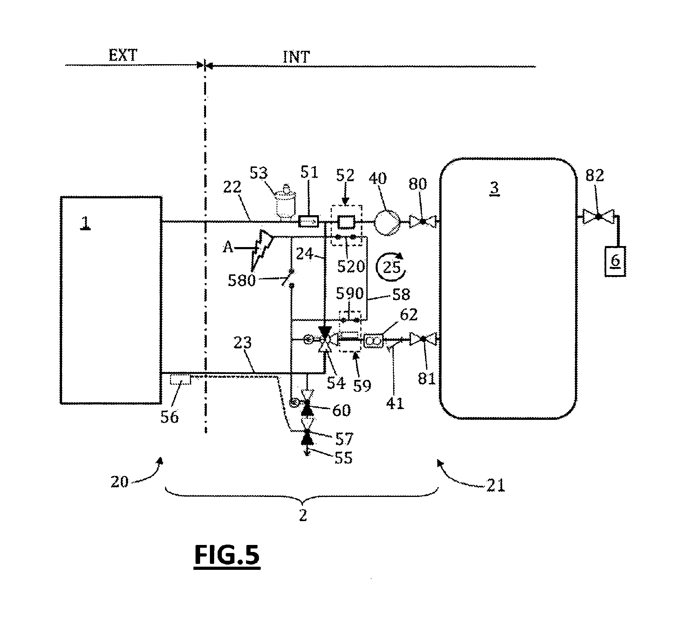

Un cinquième mode de réalisation d'une installation de production de chaleur est illustré en figure 5 et constitue une variante du quatrième mode de réalisation. Cette installation se distingue de l'installation conforme au quatrième mode de réalisation en ce que :
- elle comprend un dispositif de mesure du débit 62, ou débitmètre, disposé sur la conduite de sortie 23, entre le détecteur de température et le filtre 41 ;
- la pompe hydraulique 40 est disposée sur la conduite d'entrée 22, entre le détecteur de débit 52 et l'entrée du réseau d'échangeur thermique 3 ;
- elle comprend des vannes passives 80, 81, 82 disposées respectivement à l'entrée du réseau d'échangeur thermique 3, à la sortie du réseau d'échangeur thermique 3 et entre le réseau d'échangeur thermique 3 et l'alimentateur automatique 6 ;
- un interrupteur ou shunt manuel 580 disposé en parallèle du circuit de commande 58, et plus particulièrement en parallèle des interrupteurs 520 et 590 des respectivement détecteur de débit 52 et détecteur de température 59.

Le fonctionnement de l'installation est décrit ci-après, où le système de production de chaleur 1 est une pompe à chaleur alimentée électriquement, avec plusieurs séquences de fonctionnement.

Une première séquence de fonctionnement consiste en l'apparition d'un défaut d'alimentation électrique combiné à une situation sans risque de gel.

Dans un premier temps, le fonctionnement est normal et le liquide circule dans le circuit hydraulique 2 entre la pompe à chaleur 1 et le réseau d'échangeur thermique 3 : l'interrupteur 580 est ouvert, les interrupteurs 520 et 590 sont fermés, la vanne déviatrice 54 est en position ouverte, la première vanne de vidange 60 est en position fermée et la deuxième vanne de vidange 57 est en position fermée.

Dans un deuxième temps, le défaut d'alimentation électrique apparaît de sorte que la pompe hydraulique 40 s'arrête, en conséquence de quoi le débit de liquide diminue jusqu'à ce que l'interrupteur 520 du détecteur de débit 52 s'ouvre et coupe l'alimentation électrique à la fois de la vanne déviatrice 54 et de la première vanne de vidange 60, de sorte que la vanne déviatrice 54 bascule en position fermée et la première vanne de vidange 60 bascule en position ouverte. La deuxième vanne de vidange 57 reste en position fermée.

Dans un troisième temps, le défaut d'alimentation électrique disparaît, de sorte que la pompe hydraulique 40 fonctionne à nouveau, mettant en circulation le liquide dans la canalisation de liaison 24. Cette mise en circulation du liquide entraîne l'augmentation du débit jusqu'à ce que l'interrupteur 520 du détecteur de débit 52 se ferme et permet l'alimentation électrique à la fois de la vanne déviatrice 54 et de la première vanne de vidange 60, de sorte que la vanne déviatrice 54 revient en position ouverte et la première vanne de vidange 60 revient en position fermée, correspondant à un retour à la normale.

Une deuxième séquence de fonctionnement consiste en l'apparition d'un défaut d'alimentation électrique combiné à une situation avec risque de gel.

Dans un premier temps, le fonctionnement est normal et le liquide circule dans le circuit hydraulique 2 entre la pompe à chaleur 1 et le réseau d'échangeur thermique 3 : l'interrupteur 580 est ouvert, les interrupteurs 520 et 590 sont fermés, la vanne déviatrice 54 est en position ouverte, la première vanne de vidange 60 est en position fermée et la deuxième vanne de vidange 57 est en position fermée.

Dans un deuxième temps, le défaut d'alimentation électrique apparaît de sorte que la pompe hydraulique 40 s'arrête, en conséquence de quoi le débit de liquide diminue jusqu'à ce que l'interrupteur 520 du détecteur de débit 52 s'ouvre et coupe l'alimentation électrique à la fois de la vanne déviatrice 54 et de la première vanne de vidange 60, de sorte que la vanne déviatrice 54 bascule en position fermée et la première vanne de vidange 60 bascule en position ouverte. La deuxième vanne de vidange 57 reste en position fermée.

Dans un troisième temps, la pompe à chaleur 1 est exposée à une baisse des températures de sorte que le détecteur de température 56 commande l'ouverture de la deuxième vanne de vidange 57, conduisant ainsi à la vidange de la partie externe 20 du circuit hydraulique 2 et de la pompe à chaleur 1 exposées au gel.

Dans un quatrième temps, le défaut d'alimentation électrique disparaît, de sorte que la pompe hydraulique 40 fonctionne à nouveau, mettant en circulation le liquide dans la canalisation de liaison 24. Cette mise en circulation du liquide entraîne l'augmentation du débit jusqu'à ce que l'interrupteur 520 du détecteur de débit 52 se ferme et permet l'alimentation électrique à la fois de la vanne déviatrice 54 et de la première vanne de vidange 60, de sorte que la vanne déviatrice 54 revient en position ouverte et la première vanne de vidange 60 revient en position fermée, permettant ainsi le remplissage de la partie purgée (l'alimentateur automatique 6 assurant le complément de pression nécessaire pour un tel remplissage) et enfin un retour à la normale.

Une troisième séquence de fonctionnement consiste en l'apparition d'un défaut de fonctionnement interne de la pompe à chaleur 1 combiné à une situation avec risque de gel.

Dans un premier temps, le fonctionnement est normal et le liquide circule dans le circuit hydraulique 2 entre la pompe à chaleur 1 et le réseau d'échangeur thermique 3 : l'interrupteur 580 est ouvert, les interrupteurs 520 et 590 sont fermés, la vanne déviatrice 54 est en position ouverte, la première vanne de vidange 60 est en position fermée et la deuxième vanne de vidange 57 est en position fermée.

Dans un deuxième temps, le défaut de fonctionnement interne de la pompe à chaleur 1 apparaît de sorte que la température du liquide en sortie de la pompe à chaleur 1 baisse de façon anormale, jusqu'à ce que l'interrupteur 590 du détecteur de température 59 s'ouvre et coupe l'alimentation électrique à la fois de la vanne déviatrice 54 et de la première vanne de vidange 60, de sorte que la vanne déviatrice 54 bascule en position fermée et la première vanne de vidange 60 bascule en position ouverte. La deuxième vanne de vidange 57 reste en position fermée.

Dans un troisième temps, la pompe à chaleur 1 est exposée à une baisse des températures de sorte que le détecteur de température 56 commande l'ouverture de la deuxième vanne de vidange 57, conduisant ainsi à la vidange de la partie externe 20 du circuit hydraulique 2 et de la pompe à chaleur 1 exposées au gel.

Dans un quatrième temps, un réparateur bascule l'interrupteur 580 en position fermée, permettant ainsi l'alimentation électrique à la fois de la vanne déviatrice 54 et de la première vanne de vidange 60, de sorte que la vanne déviatrice 54 revient en position ouverte et la première vanne de vidange 60 revient en position fermée, conduisant au remplissage de la partie purgée (l'alimentateur automatique 6 assurant le complément de pression nécessaire pour un tel remplissage).

De la sorte, le réparateur peut diagnostiquer le dysfonctionnement interne de la pompe à chaleur 1 en forçant le fonctionnement de l'installation malgré le dysfonctionnement présent dans la pompe à chaleur 1. Ensuite, le réparateur peut réparer le dysfonctionnement puis redémarrer la pompe à chaleur 1 après avoir ouvert manuellement l'interrupteur 580, de sorte que la température remonte dans le circuit hydraulique 2 et que l'interrupteur 590 du détecteur de température 59 se ferme et permet l'alimentation électrique à la fois de la vanne déviatrice 54 et de la première vanne de vidange 60, de sorte que la vanne déviatrice 54 revient en position ouverte et la première vanne de vidange 60 revient en position fermée, permettant ainsi le remplissage de la partie purgée (l'alimentateur automatique 6 assurant le complément de pression nécessaire pour un tel remplissage) et enfin un retour à la normale..

Une quatrième séquence de fonctionnement consiste en l'apparition d'un défaut de débit, par exemple du fait d'un bouchage dans le filtre 41, combiné à une situation avec risque de gel.

Dans un premier temps, le fonctionnement est normal et le liquide circule dans le circuit hydraulique 2 entre la pompe à chaleur 1 et le réseau d'échangeur thermique 3 : l'interrupteur 580 est ouvert, les interrupteurs 520 et 590 sont fermés, la vanne déviatrice 54 est en position ouverte, la première vanne de vidange 60 est en position fermée et la deuxième vanne de vidange 57 est en position fermée.

Dans un deuxième temps, le défaut de bouchage apparaît de sorte que le débit de liquide diminue jusqu'à ce que l'interrupteur 520 du détecteur de débit 52 s'ouvre et coupe l'alimentation électrique à la fois de la vanne déviatrice 54 et de la première vanne de vidange 60, de sorte que la vanne déviatrice 54 bascule en position fermée et la première vanne de vidange 60 bascule en position ouverte. La deuxième vanne de vidange 57 reste en position fermée.

Dans un troisième temps, la pompe à chaleur 1 est exposée à une baisse des températures de sorte que le détecteur de température 56 commande l'ouverture de la deuxième vanne de vidange 57, conduisant ainsi à la vidange de la partie externe 20 du circuit hydraulique 2 et de la pompe à chaleur 1 exposées au gel.

Dans un quatrième temps, le défaut de bouchage disparaît, par exemple après avoir nettoyé le filtre 41, de sorte que la pompe hydraulique 40 fonctionne à nouveau, mettant en circulation le liquide dans la canalisation de liaison 24. Cette mise en circulation du liquide entraîne l'augmentation du débit jusqu'à ce que l'interrupteur 520 du détecteur de débit 52 se ferme et permet l'alimentation électrique à la fois de la vanne déviatrice 54 et de la première vanne de vidange 60, de sorte que la vanne déviatrice 54 revient en position ouverte et la première vanne de vidange 60 revient en position fermée, permettant ainsi le remplissage de la partie purgée (l'alimentateur automatique 6 assurant le complément de pression nécessaire pour un tel remplissage) et enfin un retour à la normale.

L'installation est particulièrement avantageuse pour les pompes à chaleur susceptibles d'arrêts fréquents à cause de coupures d'électricité plus ou moins longues. Si la coupure d'électricité ne dure pas longtemps, la vanne déviatrice 54 peut être rouverte avant que la vidange ne soit effectuée, évitant ainsi des vidanges systématiques consommatrices de liquide et d'énergie.

L'installation et le procédé conformes à l'invention permettent de :
- protéger le circuit hydraulique, la pompe à chaleur 1 et le réseau d'échangeur thermique 3 dès l'apparition du dysfonctionnement responsable notamment de la chute du débit, indépendamment de la température extérieure et de la température dans le circuit hydraulique 2 ;
- de protéger la pompe hydraulique 40 maintenant un débit suffisant dans la partie interne 21 du circuit hydraulique 2 après fermeture de la vanne déviatrice, avant l'augmentation autorisant la réouverture de la vanne déviatrice 54 et donc du circuit hydraulique 2 lorsque le dysfonctionnement a disparu.

Cette installation peut être équipée de plusieurs autres types de détecteur de fonctionnement, comme par exemple des détecteurs de défaut de pression haute ou basse dans la pompe à chaleur ou des détecteurs de défaut de température haute sur circuit secondaire.

Cette installation présente en outre l'intérêt de nécessiter une ou deux vannes de vidange 57, 60 du type classique ou standard, c'est-à-dire intrinsèquement insensible au rayonnement solaire et/ou à la température.

L'installation peut être équipée directement avec les différents moyens de mise en oeuvre du procédé conforme à l'invention, à savoir les organes 50 à 59 et les organes 6 ou 7, ou bien ces moyens peuvent être rajoutés à une installation classique déjà existante pour mettre à niveau cette dernière vis-à-vis des risques de gel.

En outre, la mise hors gel de l'installation fonctionne même en cas de coupure de l'alimentation électrique.

Bien entendu l'exemple de mise en oeuvre évoqué ci-dessus ne présente aucun caractère limitatif et d'autres détails et améliorations peuvent être apportés à l'installation selon l'invention, sans pour autant sortir du cadre de l'invention tel que revendiqué où d'autres types de vanne et/ou de détecteur peuvent être réalisées.

Selon un premier exemple, la ou les vannes 57 et 60 peuvent être situées à l'intérieur ou à l'extérieur du bâtiment.

Selon un deuxième exemple, le détecteur de débit 52 peut être également situé sur la canalisation de sortie 23 entre le système de production de chaleur 1 et la vanne déviatrice 54, notamment à proximité du détecteur de température 59 dans le cas du quatrième mode de réalisation.

Selon un troisième exemple, le détecteur de température 56 peut être situé sur la partie externe 20 du circuit hydraulique 2 ou n'importe où à l'extérieur du bâtiment.

## Revendications

1. Procédé de mise hors gel d'un système de production de chaleur (1), notamment du type pompe à chaleur, raccordé à un réseau d'échangeur thermique (3) par l'intermédiaire d'un circuit hydraulique (2) dans lequel circule un liquide caloporteur, ledit circuit hydraulique (2) comportant une partie externe (20) sensible au gel et une partie interne (21), **caractérisé en ce qu'**il comprend les étapes consécutives suivantes :
- détecter un dysfonctionnement responsable de l'interruption de la production de chaleur par le système de production de chaleur (1) et/ou de la diminution du débit de liquide en sortie du système de production de chaleur (1) en-deçà d'un seuil de débit prédéterminé ;
- isoler la partie externe (20) de la partie interne (21) du circuit hydraulique (2) si un dysfonctionnement est détecté indépendamment d'un risque de gel du liquide dans la partie externe (20) du circuit hydraulique (2) ;
- détecter un risque de gel du liquide isolé dans la partie externe (20) du circuit hydraulique (2) ;
- vidanger la partie externe (20) du circuit hydraulique (2) de son liquide si un risque de gel est détecté ;
- rétablir la liaison entre la partie externe (20) et la partie interne (21) du circuit hydraulique (2) si le dysfonctionnement a disparu et même si un risque de gel est détecté dans la partie externe (20) du circuit hydraulique (2);
- rajouter du liquide dans le circuit hydraulique (2) afin de compenser au moins en partie le liquide vidangé si la vidange de la partie externe (20) du circuit hydraulique (2) a été effectuée.

2. Procédé selon la revendication 1, comprenant une étape de mise en circulation du liquide dans une boucle de dérivation (25) du circuit hydraulique (2), isolée de la partie externe (20) du circuit hydraulique (2), jusqu'à atteindre à un débit seuil suffisant pour rétablir la liaison entre la partie externe (20) et la partie interne (21) du circuit hydraulique (2).

3. Procédé selon l'une quelconque des revendications 1 ou 2, dans lequel l'étape de détection d'un dysfonctionnement vise à détecter au moins l'une des situations suivantes :
- défaut d'alimentation en énergie du système de production de chaleur (1), notamment en énergie électrique ;
- défaut dans le circuit hydraulique, notamment dans la partie externe (20) du circuit hydraulique (2) ;
- défaillance interne du système de production de chaleur (1) ;
- diminution du débit de liquide en sortie du système de production de chaleur (1) et/ou en entrée du réseau d'échangeur thermique (3) en-deçà d'un seuil de débit prédéterminé ;
- diminution de la température de liquide en entrée et/ou en sortie du système de production de chaleur (1) et/ou du réseau d'échangeur thermique (3) en-deçà d'un seuil de température prédéterminé ;
- diminution de la pression de liquide en sortie du système de production de chaleur (1) et/ou en entrée du réseau d'échangeur thermique (3) en-deçà d'un seuil de pression prédéterminé.

4. Installation de production de chaleur comprenant un système de production de chaleur (1) raccordé à un réseau d'échangeur thermique (3) par l'intermédiaire d'un circuit hydraulique (2) dans lequel circule un liquide caloporteur, ledit circuit hydraulique (2) comportant une partie externe (20) sensible au gel et une partie interne (21) isolée, **caractérisée en ce que** l'installation comporte des moyens adaptés pour la mise en oeuvre du procédé conforme à l'une quelconque des revendications précédentes, à savoir :
- des moyens de détection d'un dysfonctionnement (52 ; 59) responsable de l'interruption de la production de chaleur par le système de production de chaleur (1) et/ou de la diminution du débit de liquide en sortie du système de production de chaleur (1) en-deçà d'un seuil de débit prédéterminé ;
- des moyens de détection d'un risque de gel (56) du liquide contenu dans la partie externe (20) du circuit hydraulique (2) ;
- des moyens de dérivation (50, 51, 54) reliés aux moyens de détection d'un dysfonctionnement (52 ; 59) et conçus pour, d'une part, isoler la partie externe (20) de la partie interne (21) du circuit hydraulique (2) si un dysfonctionnement est détecté par les moyens de détection d'un dysfonctionnement (52 ; 59) indépendamment d'un risque de gel détecté par les moyens de détection d'un risque de gel (56), et pour, d'autre part, rétablir la liaison entre la partie externe (20) et la partie interne (21) du circuit hydraulique (2) si le dysfonctionnement a disparu et même si un risque de gel est détecté par les moyens de détection d'un risque de gel (56) ;
- des moyens pour vidanger (55, 57 ; 60) la partie externe (20) du circuit hydraulique (2) de son liquide, lesdits moyens pour vidanger (55, 57 ; 60) étant reliés aux moyens de détection d'un risque de gel (56) et conçus pour vidanger la partie externe (20) du circuit hydraulique (2) de son liquide si un risque de gel est détecté par lesdits moyens de détection d'un risque de gel (56) ;
- des moyens pour remplir la partie externe (20) du circuit hydraulique (2) après vidange afin de compenser au moins en partie le liquide vidangé si la vidange de la partie externe (20) du circuit hydraulique (2) a été effectuée ; et
- des moyens de mise en circulation (40) du liquide dans l'installation.

5. Installation selon la revendication 4, dans laquelle le circuit hydraulique (2) comprend :
- une canalisation d'entrée (22) reliant la sortie du système de production de chaleur (1) à l'entrée du réseau d'échangeur thermique (3),
- une canalisation de sortie (23) reliant la sortie du réseau d'échangeur thermique (3) à l'entrée du système de production de chaleur (1),
- une canalisation de liaison (24) reliant entre elles lesdites canalisations d'entrée (22) et de sortie (23) pour définir ensemble une boucle de dérivation (25) reliant l'entrée du réseau d'échangeur thermique (3) et la sortie du réseau d'échangeur thermique (3) et court-circuitant le système de production de chaleur (1) ; et
- une conduite de vidange (55) de la partie externe (20) du circuit hydraulique (2) ;
dans laquelle les moyens de dérivation comprennent une vanne hydraulique (54) disposée sur la canalisation d'entrée (22) ou de sortie (23), ladite vanne étant du type vanne déviatrice (54) à trois voies et étant commandée par les moyens de détection d'un dysfonctionnement (52 ; 59) pour occuper deux positions :
- une position ouverte, si aucun dysfonctionnement n'est détecté par les moyens de détection d'un dysfonctionnement (52 ; 59), dans laquelle le liquide circule entre le réseau d'échangeur thermique (3) et le système de production de chaleur (1) via les canalisations d'entrée (22) et de sortie (23), et
- une position fermée, si un dysfonctionnement est détecté par les moyens de détection d'un dysfonctionnement (52 ; 59), dans laquelle le liquide circule dans la boucle de dérivation (25) ;
et dans laquelle les moyens de mise en circulation (40) du liquide sont disposés dans la boucle de dérivation (25).

6. Installation selon la revendication 5, dans laquelle les moyens de détection d'un dysfonctionnement comprennent un détecteur de débit (52) disposé dans la boucle de dérivation (25) du circuit hydraulique (2), ledit détecteur de débit (52) commandant la vanne déviatrice (54) de sorte que :
- au-dessus d'un débit seuil prédéterminé, la vanne déviatrice (54) est en position ouverte ;
- en-dessous du débit seuil prédéterminé, la vanne déviatrice (54) est en position fermée.

7. Installation selon les revendications 5 ou 6, dans laquelle les moyens de détection d'un dysfonctionnement comprennent un détecteur de température (59), distinct des moyens de détection d'un risque de gel (56), conçu pour détecter la température dans la canalisation d'entrée (22) ou de sortie (23), ledit détecteur de température (59) commandant les moyens de mise en circulation (40) du liquide de sorte que :
- au-dessus d'une température seuil prédéterminée, les moyens de mise en circulation (40) sont en fonctionnement afin de maintenir la circulation de liquide ;
- en-dessous de la température seuil prédéterminée, les moyens de mise en circulation (40) sont en arrêt de sorte que la circulation de liquide est interrompue.

8. Installation selon les revendications 5 ou 6, dans laquelle les moyens de détection d'un dysfonctionnement comprennent un détecteur de température (59), distinct des moyens de détection d'un risque de gel (56), conçu pour détecter la température dans la canalisation d'entrée (22) ou de sortie (23), ledit détecteur de température (59) commandant la vanne déviatrice (54) de sorte que :
- au-dessus d'une température seuil prédéterminée, la vanne déviatrice (54) est en position ouverte ;
- en-dessous de la température seuil prédéterminée, la vanne déviatrice (54) est en position fermée.

9. Installation selon l'une quelconque des revendications 5 à 8, dans lequel la vanne déviatrice (54) comprend une entrée sur la partie externe (20) du circuit hydraulique (2), une première sortie sur la partie interne (21) du circuit hydraulique (2) et une deuxième sortie sur la conduite de vidange (55), et peut occuper les deux positions suivantes :
- la position ouverte dans laquelle l'entrée et la première sortie sont en communication ; et
- la position fermée dans laquelle l'entrée et la deuxième sortie sont en communication.

10. Installation selon la revendication 9, dans laquelle les moyens pour vidanger la partie externe (20) du circuit hydraulique (2) comprennent une vanne de vidange (57) à deux voies, notamment du type vanne thermostatique, disposée sur la conduite de vidange (55) et commandée par les moyens de détection d'un risque de gel (56).

11. Installation selon les revendications 9 ou 10, dans laquelle les moyens de dérivation comprennent une soupape différentielle (50) disposée sur la canalisation de liaison (24), en parallèle du réseau d'échangeur thermique (3) entre les canalisations respectivement d'entrée (22) et de sortie (23) du circuit hydraulique (2).

12. Installation selon l'une quelconque des revendications 5 à 8, dans laquelle la vanne déviatrice (54) comprend une entrée sur la partie interne (21) du circuit hydraulique (2), une première sortie sur la partie externe (20) du circuit hydraulique (2), et une deuxième sortie sur la canalisation de liaison (24), et peut occuper les deux positions suivantes :
- la position ouverte dans laquelle l'entrée et la première sortie sont en communication ; et
- la position fermée dans laquelle l'entrée et la deuxième sortie sont en communication.

13. Installation selon la revendication12, dans laquelle les moyens pour vidanger la partie externe (20) du circuit hydraulique (2) comprennent :
- une première vanne de vidange (60) à deux voies disposée sur la conduite de vidange (55) et commandée par les moyens de détection d'un dysfonctionnement (52 ; 59) ; et
- une deuxième vanne de vidange (57) à deux voies, notamment du type vanne thermostatique, disposée sur la conduite de vidange (55) et commandée par les moyens de détection d'un risque de gel (56).

14. Installation selon l'une quelconque des revendications 5 à 13, comprenant un détecteur de pression (7) conçu pour détecter une chute de la pression de liquide dans la partie externe (20) du circuit hydraulique (2) en-deçà d'une pression seuil prédéterminée en cas de vidange de ladite partie externe (20) via la conduite de vidange (55), et dans laquelle le détecteur de pression (52) commande la vanne déviatrice (54) afin de maintenir celle-ci en position fermée tant que la pression de liquide dans la partie externe (20) du circuit hydraulique (2) est inférieure à la pression seuil.

## Claims

1. A method for freeze-proofing a heat production system (1), in particular of the heat pump type, connected to a heat exchanger network (3) via a hydraulic circuit (2) inside which a heat transfer liquid is flowing, said hydraulic circuit (2) comprising a frost-sensitive external part (20) and an internal part (21), **characterized in that** it comprises the following consecutive steps:
- detecting a malfunction responsible for the interruption of heat production by the heat production system (1) and/or for the decrease of the liquid flow at the output of the heat production system (1) below a predetermined flow threshold;
- isolating the external part (20) from the internal part (21) of the hydraulic circuit (2) if a malfunction is detected independently from a risk of the liquid freezing inside the external part (20) of the hydraulic circuit (2);
- detecting a freeze-up risk of the liquid isolated inside the external part (20) of the hydraulic circuit (2);
- draining the liquid from the external part (20) of the hydraulic circuit (2) if a freeze-up risk is detected;
- restoring the connection between the external part (20) and the internal part (21) of the hydraulic circuit (2) if the malfunction has disappeared and even though a freeze-up risk is detected inside the external part (20) of the hydraulic circuit (2);
- adding liquid into the hydraulic circuit (2) so as to compensate at least partially for the liquid drained if draining of the external part (20) of the hydraulic circuit (2) has been performed.

2. The method according to claim 1, comprising a step of flowing the liquid in a bypass loop (25) of the hydraulic circuit (2), isolated from the external part (20) of the hydraulic circuit (2), until a sufficient threshold flow is reached for restoring the connection between the external part (20) and the internal part (21) of the hydraulic circuit (2).

3. The method according to any of claims 1 or 2, wherein the step of detecting a malfunction aims at detecting at least one of the following situations:
- a defect in the supply of power, in particular electrical power, to the heat production system (1);
- a defect in the hydraulic circuit, in particular in the external part (20) of the hydraulic circuit (2);
- an internal failure of the heat production system (1);
- a decrease of the liquid flow at the output of the heat production system (1) and/or at the input of the heat exchanger network (3) below a predetermined flow threshold;
- a decrease of the liquid temperature at the input and/or output of the heat production system (1) and/or the heat exchanger network (3) below a predetermined temperature threshold;
- a decrease of the liquid pressure at the output and/or input of the heat production system (1) of the heat exchanger network (3) below a predetermined pressure threshold.

4. A heat production plant, comprising a heat production system (1) connected to a heat exchanger network (3) via a hydraulic circuit (2) inside which a heat transfer liquid is flowing, said hydraulic circuit (2) comprising an external frost-sensitive part (20) and an isolated internal part (21), **characterized in that** the plant comprises means adapted for implementing the method according to any of the preceding claims, namely:
- means for detecting a malfunction (52; 59) responsible for the interruption of heat production by the heat production system (1) and/or for the decrease of the liquid flow at the output of the heat production system (1) below a predetermined flow threshold;
- means for detecting a freeze-up risk (56) of the liquid contained inside the external part (20) of the hydraulic circuit (2);
- bypass means (50, 51, 54) connected to the malfunction detection means (52; 59) and designed for, on the one hand, isolating the external part (20) from the internal part (21) of the hydraulic circuit (2) if a malfunction is detected by the malfunction detection means (52; 59) independently from a freeze-up risk detected by the freeze-up risk detection means (56), and on the other hand, for restoring the connection between the external part (20) and the internal part (21) of the hydraulic circuit (2) if the malfunction has disappeared, and even if a freeze-up risk is detected by the freeze-up risk detection means (56);
- means for draining (55, 57; 60) the liquid from the external part (20) of the hydraulic circuit (2), said means for draining (55, 57; 60) being connected to the freeze-up risk detection means (56) and designed for draining the liquid from the external part (20) of the hydraulic circuit (2) if a freeze-up risk is detected by said freeze-up risk detection means (56);
- means for filling the external part (20) of the hydraulic circuit (2) after draining so as to compensate at least partially for the liquid drained if the draining of the external part (20) of the hydraulic circuit (2) has been performed; and
- means for flowing (40) the liquid inside the plant.

5. The plant according to claim 4, wherein the hydraulic circuit (2) comprises:
- an input line (22) connecting the output of the heat production system (1) to the input of the heat exchanger network (3),
- an output line (23) connecting the output of the heat exchanger network (3) to the input of the heat production system (1),
- a connecting line (24) connecting together said input (22) and output (23) lines so as to define together a bypass loop (25) connecting the input of the heat exchanger network (3) and the output of the heat exchanger network (3) and short-circuiting the heat production system (1); and
- a drain line (55) of the external part (20) of the hydraulic circuit (2);
wherein the bypass means comprise a hydraulic valve (54) arranged on the input (22) or output (23) line, said valve being of the three-way deflection valve (54) type and being controlled by the malfunction detection means (52; 59) so as to adopt two positions:
- an open position, if no malfunction is detected by the malfunction detection means (52; 59), in which the liquid is flowing between the heat exchanger network (3) and the heat production system (1) via the input (22) and output (23) lines, and
- a closed position, if a malfunction is detected by the malfunction detection means (52; 59), in which the liquid is flowing inside the bypass loop (25);
and wherein the liquid circulation means (40) are arranged inside the bypass loop (25).

6. The plant according to claim 5, wherein the malfunction detection means comprise a flow sensor (52) arranged in the bypass loop (25) of the hydraulic circuit (2), said flow sensor (52) controlling the deflection valve (54) so that:
- above a predetermined threshold flow, the deflection valve (54) is in an open position;
- below the predetermined threshold flow, the deflection valve (54) is in a closed position.

7. The plant according to claims 5 or 6, wherein the malfunction detection means comprise a temperature sensor (59), distinct from the freeze-up risk detection means (56), designed to detect the temperature inside the input (22) or output (23) line, said temperature sensor (59) controlling the liquid circulation means (40) so that:
- above a predetermined threshold temperature, the circulation means (40) are operational so as to maintain liquid circulation;
- below the predetermined threshold temperature, the circulation means (40) are stopped so that liquid circulation is cut.

8. The plant according to claims 5 or 6, wherein the malfunction detection means comprise a temperature sensor (59), distinct from the freeze-up risk detection means (56), designed to detect the temperature inside the input (22) or output (23) line, said temperature sensor (59) controlling the deflection valve (54) so that:
- above a predetermined threshold temperature, the deflection valve (54) is in an open position;
- below the predetermined threshold temperature, the deflection valve (54) is in a closed position.

9. The plant according to any of claims 5 to 8, wherein the deflection valve (54) comprises an input on the external part (20) of the hydraulic circuit (2), a first output on the internal part (21) of the hydraulic circuit (2) and a second output on the drain line (55), and can adopt the following two positions:
- the open position in which the input and the first output are communicating; and
- the closed position in which the input and the second output are communicating.

10. The plant according to claim 9, wherein the means for draining the external part (20) of the hydraulic circuit (2) comprise a two-way drain valve (57), in particular of the thermostatic valve type, arranged on the drain line (55) and controlled by the freeze-up risk detection means (56).

11. The plant according to claims 9 or 10, wherein the bypass means comprise a differential valve (50) arranged on the connecting line (24), in parallel to the heat exchanger network (3) respectively between the input (22) and output (23) lines of the hydraulic circuit (2).

12. The plant according to any of claims 5 to 8, wherein the deflection valve (54) comprises an input on the internal part (21) of the hydraulic circuit (2), a first output on the external part (20) of the hydraulic circuit (2), and a second output on the connecting line (24), and can adopt the following two positions:
- the open position in which the input and the first output are communicating; and
- the closed position in which the input and the second output are communicating.

13. The plant according to claim 12, wherein the means for draining the external part (20) of the hydraulic circuit (2) comprise:
- a first two-way drain valve (60) arranged on the drain line (55) and controlled by the malfunction detection means (52; 59); and
- a second two-way drain valve (57), in particular of the thermostatic valve type, arranged on the drain line (55) and controlled by the freeze-up risk detection means (56).

14. The plant according to any of claims 5 to 13, comprising a pressure sensor (7) designed for detecting a liquid pressure drop inside the external part (20) of the hydraulic circuit (2) below a predetermined threshold pressure in case of draining of said external part (20) via the drain line (55), and wherein the pressure sensor (52) controls the deflection valve (54) so as to maintain it in the closed position as long as the liquid pressure inside the external part (20) of the hydraulic circuit (2) is less than the threshold pressure.

## Patentansprüche

1. Verfahren zur Frostsicherung eines Wärmeerzeugungssystems (1), insbesondere nach Art einer Wärmepumpe, das an ein Wärmeaustauschnetz (3) über einen Hydraulikkreislauf (2) angeschlossen ist, in dem eine Wärmeübertragungsflüssigkeit umläuft, wobei der Hydraulikkreislauf (2) einen frostempfindlichen äußeren Teil (20) und einen inneren Teil (21) umfasst, **dadurch gekennzeichnet, dass** es die folgenden aufeinanderfolgenden Schritte umfasst:
- Erfassen einer Fehlfunktion, die für die Unterbrechung der Wärmeerzeugung durch das Wärmeerzeugungssystem (1) und/oder für die Verringerung des Flüssigkeitsdurchflusses am Ausgang des Wärmeerzeugungssystems (1) bis unter einen vorherbestimmten Durchflussschwellenwert verantwortlich ist;
- Isolieren des äußeren Teils (20) gegenüber dem inneren Teil (21) des Hydraulikkreislaufs (2), wenn unabhängig von einem Einfrierrisiko der Flüssigkeit in dem äußeren Teil (20) des Hydraulikkreislaufs (2) eine Fehlfunktion erfasst wird;
- Erfassen eines Einfrierrisikos der Flüssigkeit, die in dem äußeren Teil (20) des Hydraulikkreislaufs (2) isoliert ist;
- Ablassen der Flüssigkeit aus dem äußeren Teil (20) des Hydraulikkreislaufs (2), wenn ein Einfrierrisiko erfasst wird;
- Wiederherstellen der Verbindung zwischen den äußeren Teil (20) und dem inneren Teil (21) des Hydraulikkreislaufs (2), wenn die Fehlfunktion beseitigt ist, und zwar auch wenn ein Einfrierrisiko im äußeren Teil (20) des Hydraulikkreislaufs (2) erfasst wird;
- Hinzufügen von Flüssigkeit in den Hydraulikkreislauf (2), um mindestens teilweise die abgelassene Flüssigkeit auszugleichen, falls das Ablassen des äußeren Teils (20) des Hydraulikkreislaufs (2) ausgeführt wurde.

2. Verfahren nach Anspruch 1, umfassend einen Schritt des Umwälzens der Flüssigkeit in einer Umgehungsschleife (25) des Hydraulikkreislaufs (2), die von dem äußeren Teil (20) des Hydraulikkreislaufs (2) isoliert ist, bis ein ausreichender Schwellendurchfluss erreicht ist, um die Verbindung zwischen dem äußeren Teil (20) und dem inneren Teil (21) des Hydraulikkreislaufs (2) wiederherzustellen.

3. Verfahren nach einem der Ansprüche 1 oder 2, wobei der Schritt des Erfassens einer Fehlfunktion auf das Erfassen mindestens einer der folgenden Situationen abzielt:
- Defekt der Energieversorgung des Wärmeerzeugungssystems (1), insbesondere der elektrischen Energieversorgung;
- Defekt im Hydraulikkreislauf, insbesondere im äußeren Teil (20) des Hydraulikkreislaufs (2);
- internes Versagen des Wärmeerzeugungssystems (1);
- Verringerung des Flüssigkeitsdurchflusses am Ausgang des Wärmeerzeugungssystems (1) und/oder am Eingang des Wärmeaustauschnetzes (3) bis unter einen vorherbestimmten Durchflussschwellenwert;
- Verringerung der Flüssigkeitstemperatur am Eingang und/oder Ausgang des Wärmeerzeugungssystems (1) und/oder des Wärmeaustauschnetzes (3) bis unter einen vorherbestimmten Temperaturschwellenwert;
- Verringerung des Flüssigkeitsdrucks am Ausgang des Wärmeerzeugungssystems (1) und/oder am Eingang des Wärmeaustauschnetzes (3) bis unter einen vorherbestimmten Druckschwellenwert.

4. Wärmeerzeugungsanlage, umfassend ein Wärmeerzeugungssystem (1), das an ein Wärmeaustauschnetz (3) über einen Hydraulikkreislauf (2) angeschlossen ist, in dem eine Wärmeübertragungsflüssigkeit umläuft, wobei der Hydraulikkreislauf (2) einen frostempfindlichen äußeren Teil (20) und einen isolierten inneren Teil (21) umfasst, **dadurch gekennzeichnet, dass** die Anlage Mittel umfasst, die dazu geeignet sind, um das Verfahren nach einem der vorhergehenden Ansprüche umzusetzen, nämlich:
- Mittel zum Erfassen einer Fehlfunktion (52; 59), die für die Unterbrechung der Wärmeproduktion durch das Wärmeerzeugungssystem (1) und/oder für die Verringerung des Flüssigkeitsdurchflusses am Ausgang des Wärmeerzeugungssystems (1) bis unter einen vorherbestimmten Durchflussschwellenwert verantwortlich ist;
- Mittel zum Erfassen eines Einfrierrisikos (56) der Flüssigkeit, die in dem äußeren Teil (20) des Hydraulikkreislaufs (2) enthalten ist;
- Umgehungsmittel (50, 51, 54), die an die Mittel zum Erfassen einer Fehlfunktion (52; 59) angeschlossen sind und dazu ausgelegt sind, um einerseits den äußeren Teil (20) gegenüber dem inneren Teil (21) des Hydraulikkreislaufs (2) zu isolieren, wenn eine Fehlfunktion von den Mitteln zum Erfassen einer Fehlfunktion (52; 59) unabhängig von einem Einfrierrisiko, das von den Mitteln zum Erfassen eines Einfrierrisikos (56) erfasst wird, erfasst wird, und um andererseits die Verbindung zwischen dem äußeren Teil (20) und dem inneren Teil (21) des Hydraulikkreislaufs (2) wieder herzustellen, wenn die Fehlfunktion beseitigt wurde, und zwar auch wenn ein Einfrierrisiko von den Mitteln zum Erfassen eines Einfrierrisikos (56) erfasst wird;
- Mittel zum Ablassen (55, 57; 60) der Flüssigkeit aus dem äußeren Teil (20) des Hydraulikkreislaufs (2), wobei die Ablassmittel (55, 57; 60) an die Mittel zum Erfassen eines Einfrierrisikos (56) angeschlossen sind und dazu ausgelegt sind, um die Flüssigkeit aus dem äußeren Teil (20) des Hydraulikkreislaufs (2) abzulassen, wenn ein Einfrierrisiko von den Mitteln zum Erfassen eines Einfrierrisikos (56) erfasst wird;
- Mittel zum Auffüllen des äußeren Teils (20) des Hydraulikkreislaufs (2) nach dem Ablassen, um mindestens teilweise die Flüssigkeit auszugleichen, die abgelassen wird, wenn das Ablassen des äußeren Teils (20) des Hydraulikkreislaufs (2) ausgeführt wurde; und
- Mittel zum Umwälzen (40) der Flüssigkeit in der Anlage.

5. Anlage nach Anspruch 4, wobei der Hydraulikkreislauf (2) Folgendes umfasst:
- eine Eingangsrohrleitung (22), die den Ausgang des Wärmeerzeugungssystems (1) mit dem Eingang des Wärmeaustauschnetzes (3) verbindet,
- eine Ausgangsrohrleitung (23), die den Ausgang des Wärmeaustauschnetzes (3) mit dem Eingang des Wärmeerzeugungssystems (1) verbindet,
- eine Verbindungsrohrleitung (24), welche die Eingangs- (22) und Ausgangs- (23) Rohrleitungen miteinander verbindet, um zusammen eine Umgehungsschleife (25) zu definieren, die den Eingang des Wärmeaustauschnetzes (3) und den Ausgang des Wärmeaustauschnetzes (3) verbindet und das Wärmeerzeugungssystem (1) kurzschließt; und
- eine Ablassleitung (55) des äußeren Teils (20) des Hydraulikkreislaufs (2);
wobei die Umgehungsmittel ein hydraulisches Ventil (54) umfassen, das auf der Eingangs- (22) oder Ausgangs- (23) Rohrleitung angeordnet ist, wobei das Ventil nach Art eines Dreiwege-Umlenkventils (54) ist und von den Mitteln zum Erfassen einer Fehlfunktion (52; 59) gesteuert wird, um zwei Positionen einzunehmen:
- eine offene Position, wenn von den Mitteln zum Erfassen einer Fehlfunktion (52; 59) keine Fehlfunktion erfasst wird, in der die Flüssigkeit zwischen dem Wärmeaustauschnetz (3) und dem Wärmeerzeugungssystem (1) über die Eingangs- (22) und Ausgangs- (23) Rohrleitungen umläuft, und
- eine geschlossene Position, wenn von den Mitteln zum Erfassen einer Fehlfunktion (52; 59) eine Fehlfunktion erfasst wird, in der die Flüssigkeit in der Umgehungsschleife (25) umläuft;
und wobei die Mittel zum Umwälzen (40) der Flüssigkeit in der Umgehungsschleife (25) angeordnet sind.

6. Anlage nach Anspruch 5, wobei die Mittel zum Erfassen einer Fehlfunktion einen Durchflusssensor (52) umfassen, der in der Umgehungsschleife (25) des Hydraulikkreislaufs (2) angeordnet ist, wobei der Durchflusssensor (52) das Umlenkventil (54) steuert, so dass:
- sich das Umlenkventil (54) über einem vorherbestimmten Schwellendurchfluss in einer offenen Position befindet;
- sich das Umlenkventil (54) unter dem vorherbestimmten Schwellendurchfluss in einer geschlossenen Position befindet.

7. Anlage nach Anspruch 5 oder 6, wobei die Mittel zum Erfassen einer Fehlfunktion einen Temperatursensor (59) umfassen, der von den Mitteln zum Erfassen eines Einfrierrisikos (56) getrennt ist und dazu ausgelegt ist, um die Temperatur in der Eingangs- (22) oder Ausgangs- (23) Rohrleitung zu erfassen, wobei der Temperatursensor (59) die Mittel zum Umwälzen (40) der Flüssigkeit derart steuert, dass:
- die Umwälzmittel (40) über einer vorherbestimmten Schwellentemperatur funktionieren, um den Flüssigkeitsumlauf zu erhalten;
- die Umwälzmittel (40) unter der vorherbestimmten Schwellentemperatur stillstehen, so dass der Flüssigkeitsumlauf unterbrochen wird.

8. Anlage nach Anspruch 5 oder 6, wobei die Mittel zum Erfassen einer Fehlfunktion einen Temperatursensor (59) umfassen, der von den Mitteln zum Erfassen eines Einfrierrisikos (56) getrennt ist und dazu ausgelegt ist, um die Temperatur in der Eingangs- (22) oder Ausgangs- (23) Rohrleitung zu erfassen, wobei der Temperatursensor (59) das Umlenkventil (54) derart steuert, dass:
- sich das Umlenkventil (54) über einer vorherbestimmten Schwellentemperatur in einer offenen Position befindet;
- sich das Umlenkventil (54) unter der vorherbestimmten Schwellentemperatur in einer geschlossenen Position befindet.

9. Anlage nach einem der Ansprüche 5 bis 8, wobei das Umlenkventil (54) einen Eingang auf dem äußeren Teil (20) des Hydraulikkreislaufs (2), einen ersten Ausgang auf dem inneren Teil (21) des Hydraulikkreislaufs (2) und einen zweiten Ausgang auf der Ablassleitung (55) umfasst und die beiden folgenden Positionen einnehmen kann:
- die offene Position, in welcher der Eingang und der erste Ausgang in Verbindung stehen; und
- die geschlossene Position, in welcher der Eingang und der zweite Ausgang in Verbindung stehen.

10. Anlage nach Anspruch 9, wobei die Mittel zum Ablassen des äußeren Teils (20) des Hydraulikkreislaufs (2) ein Zweiwege-Ablassventil (57), insbesondere nach Art eines thermostatischen Ventils, umfassen, das auf der Ablassleitung (55) angeordnet ist und von den Mitteln zum Erfassen eines Einfrierrisikos (56) gesteuert wird.

11. Anlage nach Anspruch 9 oder 10, wobei die Umgehungsmittel ein Differentialventil (50) umfassen, das auf der Verbindungsrohrleitung (24) parallel zum Wärmeaustauschnetz (3), jeweils zwischen den Eingangs- (22) und Ausgangs- (23) Rohrleitungen des Hydraulikkreislaufs (2) angeordnet ist.

12. Anlage nach einem der Ansprüche 5 bis 8, wobei das Umlenkventil (54) einen Eingang auf dem inneren Teil (21) des Hydraulikkreislaufs (2), einen ersten Ausgang auf dem äußeren Teil (20) des Hydraulikkreislaufs (2) und einen zweiten Ausgang auf der Verbindungsrohrleitung (24) umfasst und die folgenden beiden Positionen einnehmen kann:
- die offene Position, in welcher der Eingang und der erste Ausgang in Verbindung stehen; und
- die geschlossene Position, in welcher der Eingang und der zweite Ausgang in Verbindung stehen.

13. Anlage nach Anspruch 12, wobei die Mittel zum Ablassen des äußeren Teils (20) des Hydraulikkreislaufs (2) Folgendes umfassen:
- ein erstes Zweiwege-Ablassventil (60), das auf der Ablassleitung (55) angeordnet ist und von den Mitteln zum Erfassen einer Fehlfunktion (52; 59) gesteuert wird; und
- ein zweites Zweiwege-Ablassventil (57), insbesondere nach Art eines thermostatischen Ventils, das auf der Ablassleitung (55) angeordnet ist und von den Mitteln zum Erfassen eines Einfrierrisikos (56) gesteuert wird.

14. Anlage nach einem der Ansprüche 5 bis 13, umfassend einen Drucksensor (7), der ausgelegt ist, um einen Flüssigkeitsdruckabfall in dem äußeren Teil (20) des Hydraulikkreislaufs (2) bis unter einen vorherbestimmten Schwellendruck zu erfassen, falls der äußere Teil (20) über die Ablassleitung (55) abgelassen wird, und wobei der Drucksensor (52) das Umlenkventil (54) steuert, um es in der geschlossenen Position zu halten, solange der Flüssigkeitsdruck in dem äußeren Teil (20) des Hydraulikkreislaufs (2) geringer als der Schwellendruck ist.
